# EUROPÄISCHE PATENTSCHRIFT

(11) **EP 2 918 874 B1**
(45) Veröffentlichungstag und Bekanntmachung des Hinweises auf die Patenterteilung: **23.03.2016**
(21) Anmeldenummer: 15000440.6
(22) Anmeldetag: 13.02.2015
(51) Int. Cl.: F16H 61/00, F16H 61/688

(54) **Verfahren zum Betreiben eines Hydrauliksystems eines Automatikgetriebes**
Method for operating a hydraulic system of an automatic gearbox
Procédé de fonctionnement d'un système hydraulique d'une transmission automatique

(30) Priorität: 01.03.2014 DE 102014003083
(43) Veröffentlichungstag der Anmeldung: 16.09.2015
(73) Patentinhaber: AUDI AG, 85045 Ingolstadt (DE)
(72) Erfinder: Ammler, Stefan, DE - 86673 Bergheim (DE)
(74) Vertreter: Wohnert, Dietmar

(56) Entgegenhaltungen:
- DE-A1-102006 055 544
- DE-A1-102010 042 189
- DE-A1-102011 100 836
- DE-A1-102011 119 702
- DE-A1-102012 209 904
- US-A1- 2005 143 224
- US-A1- 2012 088 631

## Beschreibung

Die Erfindung betrifft ein Verfahren zum Betreiben eines Hydrauliksystems eines Automatikgetriebes nach dem Patentanspruch 1 eines Kraftfahrzeugs.

Bei einem Doppelkupplungsgetriebe ist mittels zweier Teilgetriebe ein vollautomatischer Gangwechsel ohne Zugkraftunterbrechung ermöglicht. Die Übertragung des Moments erfolgt über eine von zwei Kupplungen, die die zwei Teilgetriebe mit dem Antrieb verbindet. Die Kupplungen sowie die Aktuatoren zum Einlegen der Gänge sind hydraulisch über ein Hydrauliksystem ansteuerbar.

Aus der DE 10 2011 100 836 A1 ist ein gattungsgemäßes Hydrauliksystem bekannt, das den Ausgangspunkt der vorliegenden Erfindung bildet. Die vorliegende Erfindung betrifft speziell Programmbausteine, die erforderlich sind für eine Signalverarbeitung der Ist-Stromaufnahme des Pumpenantriebs in dem Hydrauliksystem. Mit Hilfe dieser Signalverarbeitung wird erkannt, ob ein Druckspeicher-Ladebedarf vorliegt oder nicht.

Das aus der DE 10 2011 100 836 A1 bekannte Hydrauliksystem ist in einen Hochdruckkreislauf und in einen Niederdruckkreislauf aufgeteilt. Im Hochdruckkreislauf ist ein Druckspeicher vorgesehen, mit dem ein stark temperaturabhängiger Speicherdruck in einer Größenordnung von beispielsweise etwa 30 bar bereitstellbar ist. Zudem sind die hydraulisch betätigbaren Kupplungen sowie Aktuatoren (etwa Gangschaltelemente) im Hochdruckkreislauf angeordnet. Demgegenüber arbeitet der Niederdruckkreislauf bei einem Hydraulikdruck in der Größenordnung von beispielsweise etwa 5 bar. Mittels des Niederdruckkreislaufes erfolgt die Kühlung der Teilkupplungen über die Hydraulikflüssigkeit.

In dem, aus dem Stand der Technik bekannten Hydrauliksystem weist der Niederdruckkreislauf eine Kühlpumpe und der Hochdruckkreislauf eine Ladepumpe auf, mit der der Druckspeicher auf den erforderlichen Speicherdruck aufgeladen wird. Die beiden Hydraulikpumpen werden über eine gemeinsame Antriebswelle mit Hilfe eines gemeinsamen Elektromotors angetrieben. Der Elektromotor wird über eine Steuereinrichtung angesteuert. Bei Vorliegen eines Druckspeicher-Ladebedarfs wird der Elektromotor mit einer Ladedrehzahl angesteuert. Alternativ und/oder zusätzlich wird der Elektromotor zum Beispiel bei Vorliegen eines Kühlbedarfs (das heißt bei Vorliegen eines Nicht-Ladebedarfs) mit einer Kühldrehzahl angesteuert. Zudem sind der Hochdruckkreislauf und Niederdruckkreislauf über eine Bypassleitung mit integriertem Steuerventil verbindbar. Das Steuerventil ist in Abhängigkeit von dem Speicherdruck im Hochdruckkreislauf ohne weitere Fremdenergie, das heißt selbsttätig, zwischen einer Ladestellung und einer Nicht-Ladestellung (Kühlstellung) verstellbar. In der Ladestellung arbeitet das Hydrauliksystem im Ladebetrieb (das heißt die Ladepumpe ist mit dem Hochdruckkreislauf strömungstechnisch gekoppelt) bei hoher Pumpenlast mit entsprechend großer Ist-Stromaufnahme. Demgegenüber arbeitet das Hydrauliksystem in der Nicht-Ladestellung (das heißt Kühlstellung) des Steuerventils zum Beispiel in einem Kühlbetrieb oder in einem sonstigen Betrieb, zum Beispiel einem Filterreinigungsbetrieb.

Nachfolgend ist aus Verständnisgründen meist von der Kühlstellung des Steuerventils die Rede. Es wird darauf hingewiesen, dass die Kühlstellung und die Nicht-Ladestellung des Steuerventils identisch sind. Zudem ist aus Verständnisgründen nachfolgend die Rede von einem Kühlbetrieb sowie von einer Kühldrehzahl. Der Kühlbetrieb ist lediglich ein Beispiel für einen Nicht-Ladebetrieb, so dass der Begriff Kühlbetrieb ohne weiteres mit dem allgemeineren Begriff Nicht-Ladebetrieb ersetzbar ist.

In der Kühlstellung des Steuerventils ist neben der Kühlpumpe auch die Ladepumpe strömungstechnisch mit dem Niederdruckkreislauf verbunden sowie vom Hochdruckkreislauf entkoppelt. Im Kühlbetrieb arbeiten die Hydraulikpumpen - im Gegensatz zum Ladebetrieb - bei geringer Pumpenlast mit entsprechend geringer Ist-Stromaufnahme.

Im Stand der Technik kann die Steuereinrichtung in einem Bereitstellungsmodus arbeiten, bei dem über eine geeignete Sensorik und/oder bei Eintritt vordefinierter Ereignisse eine vom Fahrer beabsichtigte Fahrzeuginbetriebnahme vorliegt. Ist dies der Fall, so wird weiter geprüft, ob ein Druckspeicher-Ladebedarf vorliegt. Ist auch dieses Kriterium erfüllt, wird ein Vollladebetrieb gestartet, bei dem der Druckspeicher bis zu einem maximalen Speicherdruck gefüllt wird. Auf diese Weise ist bei einer folgenden Fahrzeuginbetriebnahme gewährleistet, dass das Automatikgetriebe betriebsbereit ist. Der Druckspeicher wird daher immer voll aufgeladen, auch wenn anschließend keine Fahrzeuginbetriebnahme, sondern vielmehr nur ein ausschließliches Beladen des Fahrzeugs erfolgt.

Die Aufgabe der Erfindung besteht darin, ein Verfahren zum Betreiben eines Hydrauliksystems eines Automatikgetriebes bereitzustellen, bei dem unnötige Ladevorgänge bis zur vollständigen Füllung des Druckspeichers vermieden, die Ladezyklen der Fahrzeugbatterie verringert und generell Energie eingespart werden kann.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 weist die Steuereinrichtung ein Bereitstellungsmodul auf, in dem eine vom Fahrer beabsichtigte Fahrzeuginbetriebnahme ausgewertet wird. Bei Vorliegen sowohl einer solchen beabsichtigten Fahrzeuginbetriebnahme als auch eines Druckspeicher-Ladebedarfs aktiviert das Bereitstellungsmodul nicht mehr einen Vollladebetrieb, sondern einen Teilladebetrieb. Im Teilladebetrieb wird die Ladepumpe mit einer Ladedrehzahl angesteuert, um den Speicherdruck nicht mehr auf einen maximalen Druckwert zu erhöhen, sondern auf einen vorgegebenen Mindestdruck (das heißt Ausschalt-Druckwert), bei dem das Automatikgetriebe betriebsbereit ist. Das oben erwähnte Bereitstellungsmodul kann zusammen mit der Ladepumpe in einem Regelkreis eingebunden sein, in dem auf der Grundlage des angestrebten Speicher-Mindestdruckes (Sollwert) und eines aktuell ermittelten Ist-Speicherdruckes (Istwert) die Ladepumpe mit der Ladedrehzahl (Steuerwert) angesteuert wird.

Besonders bevorzugt ist es, wenn das Bereitstellungsmodul zur Ermittlung des Ist-Speicherdruckes eine Druckmodell-Einheit aufweist. In der Druckmodell-Einheit ist ein Druckmodell hinterlegt, in dem das Zeitverhalten des Ist-Speicherdruckes durch zum Beispiel einen Algorithmus nachbildbar ist. In der Druckmodell-Einheit wird daher ein Modell-Speicherdruck generiert. Dieser wird anstelle des tatsächlichen Ist-Speicherdruckes dem Teilladebetrieb zugrundegelegt. In dieser Ausführungsvariante ist daher weder ein Speicherdrucksensor noch ein sonstiger Ventil-Positionssensor erforderlich, mit dem ein Druckspeicher-Ladebedarf im Hochdruckkreislauf ermittelbar ist. Derartige Sensoren sind bauteilaufwendig. Zudem kann der Sensorbetrieb gegebenenfalls störanfällig sein.

Wie oben erwähnt, wird der Teilladebetrieb bei Vorliegen einer beabsichtigten Fahrzeuginbetriebnahme sowie bei Vorliegen eines Druckspeicher-Ladebedarfs zu einem Start-Zeitpunkt gestartet. Zu diesem Start-Zeitpunkt wird der Modell-Speicherdruck auf einen Nullwert gesetzt, bei dem der Modell-Speicherdruck dem Umgebungsdruck entspricht. Wird demgegenüber ein Nichtvorliegen eines Druckspeicher-Ladebedarfs erkannt, das heißt der Speicherdruck ist ausreichend groß, so wird das Bereitstellungsmodul deaktiviert und/oder der Modell-Speicherdruck auf einen Initialwert gesetzt, der größer als der Ausschalt-Druckwert ist, und insbesondere dem Maximal-Speicherdruck entspricht.

In einer technischen Realisierung kann der Druckspeicher eine Kolben-Zylinder-Einheit sein, bei der eine mit den Hydraulikleitungen strömungsverbundene Ölkammer mit Hilfe eines vorgespannten Druckkolbens beaufschlagbar ist. Die Vorspannung kann über eine Druckfeder oder über einen Gasdruck erfolgen. Das heißt, dass bei einer Befüllung der Ölkammer mit Hydrauliköl im Druckspeicher zumindest ein Hydraulikdruck anliegt, der größer ist als ein später beschriebener Vorspanndruck.

Der Druckspeicher kann beispielhaft eine Kolben-Zylinder-Einheit mit einer, mit den Hydraulikleitungen verbundenen Ölkammer und einem vorgespannten Druckkolben sein. Die Vorspannung wird durch zum Beispiel einen Gasdruck erzielt, der am Druckkolben anliegt. Bei vollständig entleerter Ölkammer wird der Druckkolben mit einer Vorspannkraft gegen einen mechanischen Anschlag des Druckspeichers gedrückt. Das heißt, dass bei einem Befüllvorgang zur Überwindung der Vorspannkraft ein Hydraulikdruck am Druckkolben anliegen muss, der größer ist als ein, mit der Vorspannkraft korrelierender Vorspanndruck.

So liegt etwa in einem teilbefüllten Zustand des Druckspeichers das Hydrauliköl mit einem Speicherdruck am Druckkolben an, der größer als der Vorspanndruck ist. Im vollkommen entleerten Zustand werden die Hydraulikleitungen nicht mittels des Druckspeichers druckbeaufschlagt. Vielmehr herrscht in den Hydraulikleitungen Umgebungsdruck vor. Eine Betriebsbereitschaft des Automatikgetriebes ist dann gegeben, wenn sämtliche Hydraulikleitungen mit Hydrauliköl gefüllt sind und in den Hydraulikleitungen ein Hydraulikdruck anliegt, der größer als der Vorspanndruck ist.

Der den Sollwert bildende Mindestdruck (das heißt Ausschalt-Druckwert) ist dabei bevorzugt um eine erste Druckdifferenz größer als der Vorspanndruck. Wenn im Teilladebetrieb der Modell-Speicherdruck den Ausschalt-Druckwert überschreitet, schaltet das Bereitstellungsmodul die Ladepumpe aus. Demgegenüber wird bei einem Unterschreiten eines Einschalt-Druckwerts die Ladepumpe wieder eingeschaltet. Der Einschalt-Druckwert liegt um eine zweite Druckdifferenz unterhalb des Ausschalt-Druckwertes. Zudem ist die zweite Druckdifferenz bevorzugt kleiner als die oben erwähnte erste Druckdifferenz. Dadurch ist gewährleistet, dass der Teilladebetrieb prozesssicher oberhalb des oben erwähnten Vorspanndruckes ein- und ausgeschaltet wird.

Bedingt durch Bauteiltoleranzen steigt mit jedem Ein- und Ausschaltvorgang sowie bei fortschreitender Teilladebetriebsdauer die Abweichung zwischen dem Modell-Speicherdruck und dem Ist-Speicherdruck, wodurch sich eine fehlerhafte Ansteuerung der Ladepumpe ergeben kann. Um dies zu vermeiden, kann nach einer vorgegebenen Anzahl von Ein- und Ausschaltvorgängen, zum Beispiel nach drei Ein- und Ausschaltvorgängen, die Ladepumpe unabhängig vom aktuell berechneten Modell-Speicherdruck dauerhaft mit der Ladedrehzahl angesteuert werden, wodurch der Ist-Speicherdruck bis auf einen maximalen Druckwert erhöht wird.

In Abgrenzung zu dem oben dargelegten Teilladebetrieb kann die Steuereinrichtung zum Beispiel bei einer erfolgten Fahrzeuginbetriebnahme sowie bei Vorliegen eines Druckspeicher-Ladebedarfs einen Vollladebetrieb ausführen. Im Vollladebetrieb wird die Ladepumpe mit einer Ladedrehzahl angesteuert, um den Speicherdruck auf einen maximalen Druckwert zu erhöhen, der größer ist als der Ausschalt-Druckwert.

Das Bereitstellungsmodul kann den Teillladebetrieb bei vorgegebenen Ereignissen desaktivieren, zum Beispiel bei Eintritt einer tatsächlichen Fahrzeuginbetriebnahme.

Bevorzugt kann die Ermittlung des Druck-Ladebedarfs auf der Grundlage einer Ist-Stromaufnahme des Elektromotors der Ladepumpe sowie der Ist-Drehzahl des Elektromotors erfolgen. Diese Art der Ladebedarf-Ermittlung beruht auf dem Sachverhalt, dass eine Ist-Stromaufnahme des Elektromotors der Ladepumpe während eines Ladebetriebs zum Aufladen des Druckspeichers wesentlich größer ist als die Ist-Stromaufnahme des Elektromotors bei einem Kühlbedarf der Kupplungen.

Das Hydrauliksystem kann neben dem Hochdruckkreislauf einen Niederdruckkreislauf zum Kühlen der Kupplungen aufweisen. Der Hochdruckkreislauf und der Niederdruckkreislauf kann jeweils eine Kühlpumpe und eine Ladepumpe aufweisen, die über einen gemeinsamen Elektromotor antreibbar sind. Der Hochdruckkreis und der Niederdruckkreislauf können über eine Bypassleitung mit integriertem Steuerventil verbunden sein. Das Steuerventil kann in Abhängigkeit von dem Speicherdruck im Hochdruckkreislauf ohne weitere Fremdenergie, das heißt selbsttätig, zwischen einer Ladestellung, in der das Hydrauliksystem im Ladebetrieb arbeitet, und einer Nicht-Ladestellung (Kühlstellung) verstellbar sein, in der das Hydrauliksystem im Nicht-Ladebetrieb arbeitet. Das Steuerventil kann sich daher selbsttätig in eine Ladestellung verstellen, sofern der Speicherdruck im Hochdruckkreislauf einen unteren Stellwert unterschreitet. Umgekehrt kann sich das Steuerventil selbsttätig in seine Nicht-Ladestellung (Kühlstellung) verstellen, sofern der Speicherdruck im Hochdruckkreislauf einen oberen Schwellwert überschreitet. Nach durchgeführtem Vollladebetrieb entspricht der Speicherdruck im Hochdruckkreislauf dem oberen Schwellwert.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: ein Blockschaltbild eines Doppelkupplungsgetriebes für ein Kraftfahrzeug mit sieben Vorwärtsgängen sowie einem Rückwärtsgang;
- Fig. 2a: das Hydrauliksystem des Doppelkupplungsgetriebes aus der Fig. 1;
- Fig. 2b: beispielhaft einen Druckspeicher in Alleinstellung;
- Fig. 3: in einem weiteren Blockschaltbild Programmbausteine, die das Bereitstellungsmodul veranschaulichen; und
- Fig. 4 bis 6: jeweils Diagramme, die den Teilladebetrieb, den Vollladebetrieb sowie ein Abbruchkriterium des Teilladebetriebs veranschaulichen.

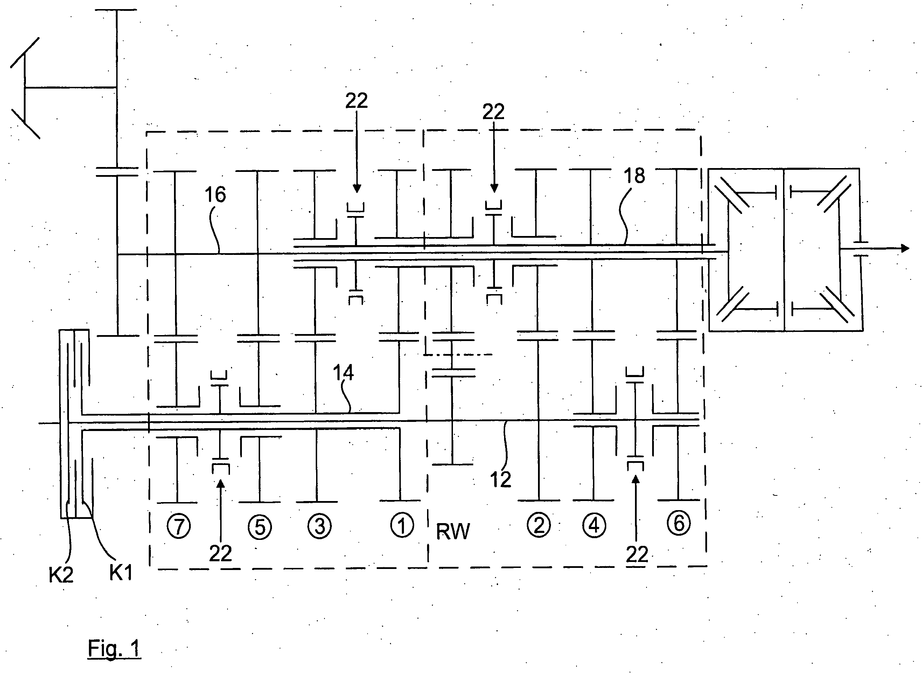

In der Fig. 1 ist in einer Prinzipdarstellung ein Doppelkupplungsgetriebe für ein Kraftfahrzeug mit Allradantrieb geneigt. Das Doppelkupplungsgetriebe weist sieben Vorwärtsgänge (siehe die eingekreisten Ziffern 1 bis 7) sowie einen Rückwärtsgang RW auf. Das Doppelkupplungsgetriebe ist nachfolgend nur insoweit beschrieben, als es für das Verständnis der Erfindung erforderlich ist. So weist das Doppelkupplungsgetriebe zwei Eingangswellen 12, 14 auf, die koaxial zueinander angeordnet sind und über zwei hydraulisch betätigbare Lamellenkupplungen K1, K2 alternierend mit der Antriebsquelle, zum Beispiel eine Brennkraftmaschine, verbindbar sind. die Eingangswelle 14 ist als eine Hohlwelle ausgeführt, in der die als Vollwelle ausgebildete Eingangswelle 12 geführt ist. Die beiden Eingangswellen 12, 14 treiben über Zahnradsätze der Vorwärtsgänge sowie des Rückwärtsganges auf eine achsparallel angeordnete Abtriebswelle 16 und eine als Hohlwelle gebildete Zwischenwelle 18 ab. Die Zahnradsätze der Vorwärtsgänge 1 bis 7 weisen jeweils Festzahnräder und über Aktuatoren 22 schaltbare Loszahnränder auf. Die Aktuatoren 22 können beispielhaft Doppelsynchronkupplungen sein, die jeweils aus einer Neutralstellung heraus zwei benachbarte Loszahnräder schalten können.

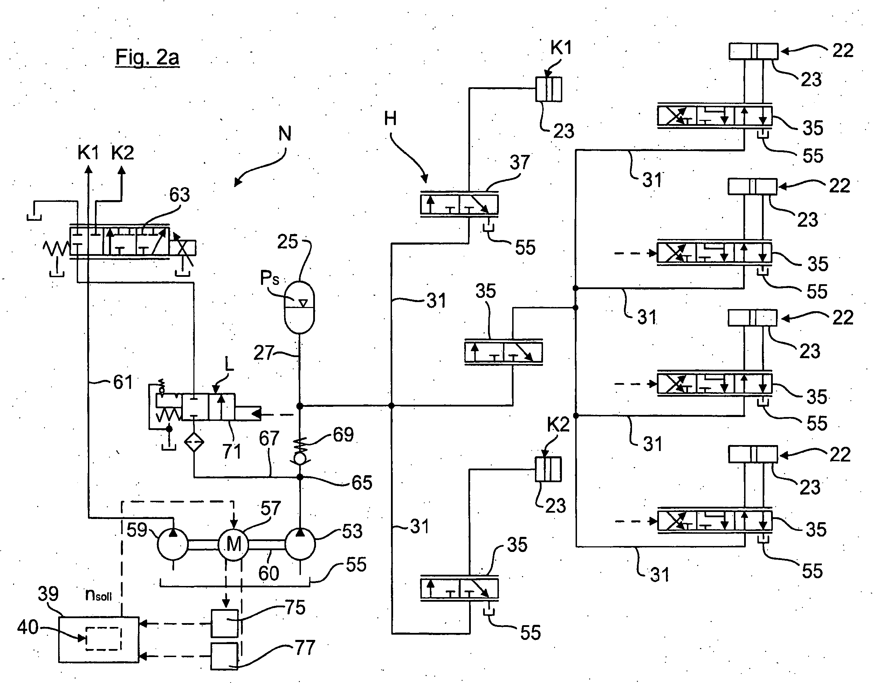

In der Fig. 2a ist das Hydrauliksystem des Doppelkupplungsgetriebes in einem stark vereinfachten Blockschaltbild dargestellt. Mit Hilfe des Hydrauliksystems werden die Hydraulikzylinder 23 der Kupplungen K1, K2 sowie der Aktuatoren 22 betätigt. Das Hydrauliksystem weist gemäß der Fig. 2a einen Hochdruckkreislauf H sowie einen Niederdruckkreislauf N auf. In dem Hochdruckkreislauf H können die darin geschalteten Hydraulikzylinder 23 der Kupplungen K1, K2 sowie der Aktuatoren 22 über einen Druckspeicher 25 mit einem Speicherdruck pₛ beaufschlagt werden, der in einer Größenordnung von zum Beispiel 30 bar liegen kann. Hierzu ist eine am Druckspeicher 25 angeschlossene Hauptleitung 27 über nicht näher beschriebene Teilleitungen 31 zu den Hydraulikzylindern 23 geführt. In den Teilleitungen 31 sind jeweils Steuerventile 35 angeordnet. Die Steuerventile 35 sind in nicht dargestellter Weise über eine zentrale Steuereinrichtung 39 ansteuerbar.

Das Hydrauliksystems weist zudem eine Ladepumpe 53 auf, die eingangsseitig mit einem Ölsumpf 55 verbunden ist. Die Ladepumpe 53 ist zum Aufladen des Druckspeichers 25 über einen Elektromotor 57 von der Steuereinheit 39 ansteuerbar. Zudem ist die Ladepumpe 53 zusammen mit einer Kühlpumpe 59 auf einer gemeinsamen Antriebswelle 60 angeordnet, die vom Elektromotor 57 angetrieben wird. Die Kühlpumpe 59 ist ausgangsseitig mit einer Niederdruckleitung 61 in Verbindung, die zu einem Verteilerventil 63 führt. In Abhängigkeit von der Stellung des Verteilerventiles 63 kann bei Vorliegen von Kühlbedarf die Hydraulikflüssigkeit zur ersten und/oder zweiten Kupplung K1, K2 und anschließend in den Ölsumpf 55 rückgeführt werden.

Gemäß der Fig. 2a zweigt die Hauptleitung 27 des Hochdruckkreislaufes H an einer Verzweigungsstelle 65 in eine Bypassleitung 67 ab, die mit der Niederdruckleitung 61 des Niederdruckkreislaufes N verbunden ist. Stromab der Verzweigungsstelle 65 ist ein später beschriebenes Rückschlagventil 69 angeordnet. Zudem ist in der Bypassleitung 67 ein Steuerventil 71 integriert. Das Steuerventil 71 kann in Abhängigkeit von Höhe des Speicherdruckes pₛ im Hochdruckkreislauf H zwischen in der Fig. 2a gezeigten Ladestellung L und einer Kühlstellung K verstellt werden. Der Speicherdruck pₛ im Hochdruckkreislauf H wirkt als ein Steuerdruck, mit dem das Steuerventil 71 ohne zusätzliche Fremdenergie, das heißt selbsttätig, verstellbar ist. Das Steuerventil 71 ist dabei so ausgelegt, dass es sich in die Ladestellung L verstellt, sofern der Speicherdruck pₛ im Hochdruckkreislauf H zum Beispiel einen unteren Schwellwert, zum Beispiel 25 bar, unterschreitet. Außerdem wird das Steuerventil 71 selbsttätig in seine Kühlstellung K verschoben, sofern der Speicherdruck pₛ einen oberen Schwellwert pₘₐₓ, zum Beispiel 28 bar, überschreitet.

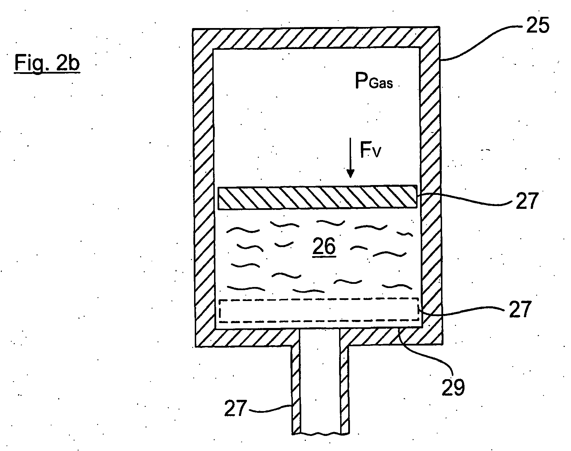

In der Fig. 2b ist der grundsätzliche Aufbau sowie die Funktionsweise des Druckspeichers 25 ersichtlich. Demzufolge ist der Druckspeicher 25 eine Kolben-Zylinder-Einheit mit einer, mit den Hydraulikleitungen 27, 31 verbundenen Ölkammer 26 und einem vorgespannten Druckkolben 27. Die Vorspannung wird hier beispielhaft durch einen Gasdruck p_{gas} erzielt, der am Druckkolben 27 anliegt. Alternativ kann die Vorspannung auch durch eine Feder erzielt werden. Bei vollständig entleerter Ölkammer 26 wird der Druckkolben 27 (in der Fig. 2b in gestrichelter Linie angedeutet) mit einer Vorspannkraft Fᵥ gegen einen Anschlag 29 des Druckspeichers 25 gedrückt. Das heißt, dass bei einem Befüllvorgang zur Überwindung der Vorspannkraft Fᵥ ein Hydraulikdruck anliegt, der größer ist als ein, mit der Vorspannkraft Fᵥ korrelierender Vorspanndruck pᵥ.

In der Fig. 2b ist der Druckspeicher 25 in einem teilbefüllten Zustand gezeigt, bei dem das Hydrauliköl unter Aufbau der Vorspannkraft Fᵥ mit einem Speicherdruck am Druckkolben 27 anliegt. Im vollkommen entleerten Zustand werden die Hydraulikleitungen 27, 31 nicht mittels des Druckspeichers 25 druckbeaufschlagt. Vielmehr herrscht in den Hydraulikleitungen 27, 31 Umgebungsdruck vor. Eine Betriebsbereitschaft des Automatikgetriebes ist. dann gegeben, wenn sämtliche Hydraulikleitungen 27, 31 mit Hydrauliköl gefüllt sind und in den Hydraulikleitungen 27 ein Hydraulikdruck anliegt, der größer als der Vorspanndruck pᵥ ist, und zwar um einen vorgegebenen Druckoffset, damit die Betriebsbereitschaft nicht sofort nach Abschaltung der Ladepumpe 53 aufgrund einer Basisleckage wieder verloren geht.

Im Fahrbetrieb kommt es durch Betätigungen der Kupplungen K1, K2 sowie der Aktuatoren 22 zu Druckverlusten. Zudem ergeben sich weitere Druckverluste durch eine Basisleckage, das heißt aufgrund von Leckagen durch Ventilspalte oder dergleichen, im Hochdruckkreislauf H. Dadurch wird der Speicherdruck pₛ während des Fahrbetriebes reduziert. Für den Fall, dass der Speicherdruck pₛ den unteren Schwellwert unterschreitet (das heißt es liegt ein Druckspeicher-Ladebedarf vor), verstellt sich das Steuerventil 71 selbsttätig in seine Ladestellung L (Fig. 2a). Bei Vorliegen eines Druckspeicher-Ladebedarfs steuert die Steuereinrichtung 39 den Elektromotor 57 mit einer Ladedrehzahl n_{L} an. Dadurch kann die Ladepumpe 53 den Druckspeicher 25 aufladen. In einem solchen Ladebetrieb arbeitet die Ladepumpe 53 unter großer Pumpenlast und daher mit entsprechend großer Ist-Stromaufnahme Iᵢₛₜ. Überschreitet der Speicherdruck pₛ den oberen Schwellwert pₘₐₓ (das heißt es liegt kein Druckspeicher-Ladebedarf mehr vor), so stellt sich das Steuerventil 71 selbsttätig in seine Kühlstellung K. In der Kühlstellung K fördert die Ladepumpe 53 über die nunmehr geöffnete Bypassleitung 67 Hydrauliköl in den Niederdruckkreislauf N. Gleichzeitig ist der Hochdruckkreislauf H über das Rückschlagventil 69 druckdicht geschlossen. Entsprechend arbeitet die Ladepumpe 53 nicht mehr mit hoher, sondern mit einer reduzierten Pumpenlast sowie entsprechend geringer Ist-Stromaufnahme Iᵢₛₜ.

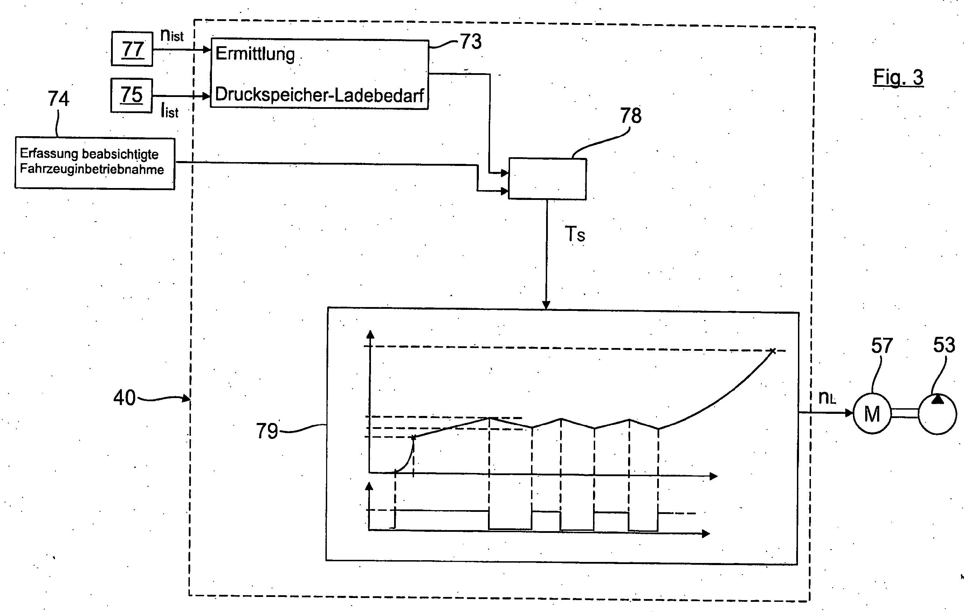

Wie oben erwähnt, steuert die Steuereinrichtung 39 bei Vorliegen eines Druckspeicher-Ladebedarfs den Elektromotor 57 mit einer Ladedrehzahl n_{L} an. Zum Erkennen eines solchen Druckspeicher-Ladebedarfs ist erfindungsgemäß auf einen Drucksensor im Hochdruckkreislauf H oder einem Lagesensor im Steuerventil 71 verzichtet. Anstelle dessen weist die Steuereinrichtung 39 eine Auswerteeinheit 73 (Fig. 3) auf. Die Auswerteeinheit 73 ist gemäß der Fig. 3 signaltechnisch in Verbindung mit einer in der Motoransteuerung integrierten Strommesseinrichtung 75, die eine Ist-Stromaufnahme Iᵢₛₜ des Elektromotors 57 erfasst, und mit einem Drehzahlsensor 77, der eine Ist-Drehzahl nᵢₛₜ des Elektromotors 57 erfasst.

Die Auswerteeinheit 73 ist gemäß der Fig. 3 Bestandteil eines Bereitstellungsmoduls 40 und in Signalverbindung mit einer geeigneten Sensorik 74 zur Erfassung einer beabsichtigten Fahrzeuginbetriebnahme. Die Sensorik 74 ist nicht von der Erfindung umfasst. Deren Aufbau sowie Funktionsweise ist daher nicht näher beschrieben.

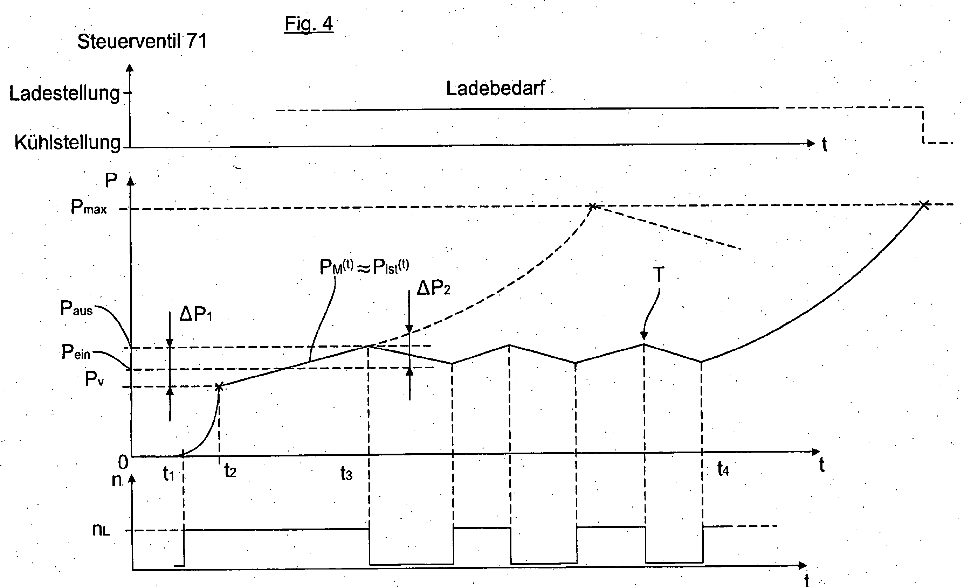

Bei Vorliegen von sowohl einem Druckspeicher-Ladebedarf als auch einer beabsichtigten Fahrzeuginbetriebnahme generiert im Bereitstellungsmodul 40 eine Aktivierungseinheit 78 ein Triggersignal Tₛ, mit dem ein Teilladebetrieb T (Fig. 4) gestartet wird. Im Teilladebetrieb T (Fig. 4) wird die Ladepumpe 53 mit einer Ladedrehzahl n_{L} angesteuert, um den ist-Speicherdruck pᵢₛₜ auf einen vorgegebenen Ausschalt-Druckwert pₐᵤₛ zu erhöhen, bei dem das Automatikgetriebe für eine bestimmte Zeit (Berücksichtigung Basisleckage) betriebsbereit ist.

Das Bereitstellungsmodul 40 steuert erfindungsgemäß die Ladepumpe 53 nicht auf der Grundlage des Ist-Speicherdrucks pᵢₛₜ an, sondern vielmehr auf der Grundlage eines in einer Druckmodell-Einheit 79 hinterlegten Druckmodells. In dem Druckmodell ist das Zeitverhalten des Ist-Speicherdruckes pᵢₛₜ durch einen Modell-Speicherdruck p_{M} nachgebildet. Im Zeitverhalten des Modell-Speicherdrucks p_{M} ist die Ansteuerung der Ladepumpe 53 mit der Ladedrehzahl n_{L} sowie ein Speicherdruck-Abbau aufgrund eines Basisleckage-Druckverlustes berücksichtigt. Dieser Modell-Speicherdruck p_{M} wird der Regelung des Teilladebetriebs T zugrundegelegt, wodurch eine auf eine sensorische Erfassung des Ist-Speicherdruckes verzichtet werden kann.

In der Fig. 4 sind die Diagramme gezeigt, die den Teilladebetrieb T veranschaulichen. Demzufolge wird der Teilladebetrieb T zu einem Zeitpunkt t₁ gestartet, und zwar nach einer erfolgter Aktivierung des Druckmodells durch die Aktivierungseinheit 78. Das Druckmodell ist zum Beispiel als ein Algorithmus in der Druckmodelleinheit 79 hinterlegt.

Mit dem Start des Teilladebetriebs T zum Zeitpunkt t₁ wird die Ladepumpe 53 mit einer Ladedrehzahl n_{L} angesteuert, wodurch die Hydraulikleitungen 27, 31 solange mit dem Hydrauliköl gefüllt werden, bis zu einem Zeitpunkt t₂ der Vorspanndruck pᵥ erreicht ist. Ab Erreichen des Vorspanndruckes pᵥ wird die Ölkammer 26 des Druckspeichers 25 gefüllt, und zwar unter Verstellung des Druckkolbens 27 entgegen der Vorspannkraft Fᵥ. Zum Startzeitpunkt t₁ ist zudem der Modell-Speicherdruck p_{M} auf einen Nullwert gesetzt, bei dem der Modell-Speicherdruck p_{M} dem Umgebungsdruck entspricht.

Zum Zeitpunkt t₃ erreicht der Modell-Speicherdruck p_{M} den Ausschalt-Druckwert pₐᵤₛ. Bei Überschreiten des Ausschalt-Druckwert pₐᵤₛ schaltet das Bereitstellungsmodul 79 den Elektromotor 57 der Ladepumpe 53 ab, das heißt die Ladedrehzahl n_{L} wird auf Null gesetzt und der Modell-Speicherdruck p_{M} wird aufgrund der Basisleckage wieder abgebaut. Wenn demgegenüber der Modell-Speicherdruck p_{M} einen Einschalt-Druckwert pₑᵢₙ unterschreitet, wird die Ladepumpe 53 wieder eingeschaltet. Gemäß der Fig. 4 liegt der Ausschalt-Druckwert pₐᵤₛ um eine erste Druckdifferenz Apᵢ über dem Vorspanndruck pᵥ. Zudem liegt der Einschalt-Druckwert Pₑᵢₙ um eine zweite Druckdifferenz Δp₂ unter dem Ausschalt-Druckwert pₐᵤₛ. Die zweite Druckdifferenz Δp₂ ist dabei kleiner bemessen als die erste Druckdifferenz Δp₁.

Wie aus der Fig. 4 weiter hervorgeht, erfolgen im Teilladebetrieb T mehrere, zum Beispiel insgesamt drei Ein- und Ausschaltvorgänge. Ab einem Zeitpunkt t₄ steuert das Bereitstellungsmodul 40 die Ladepumpe 53 dauerhaft, das heißt unabhängig vom aktuell berechneten Modell-Speicherdruck p_{M} mit der Ladedrehzahl n_{L} an.

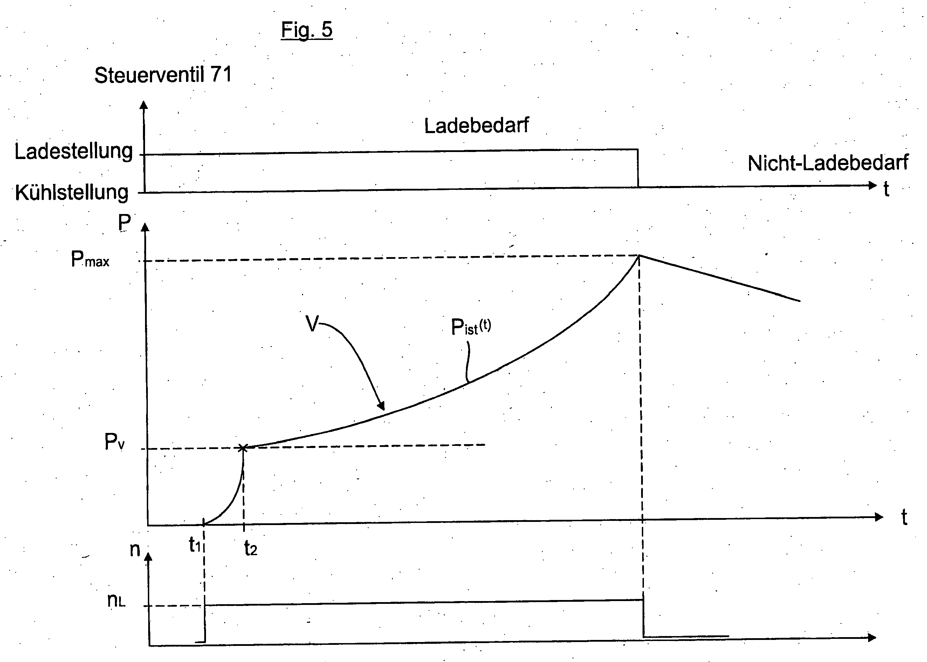

In Abgrenzung zu dem, in der Fig. 4 gezeigten Teilladebetrieb T ist in der Fig. 5 ein Vollladebetrieb V gezeigt. Der Vollladebetrieb V erfolgt zum Beispiel bei einer tatsächlich durchgeführten Fahrzeuginbetriebnahme sowie bei Vorliegen eines Druckspeicher-Ladebedarfs. Im Unterschied zum Teilladebetrieb T wird im Vollladebetrieb V der Speicherdruck pᵢₛₜ(t) bis zum maximalen Druckwert pₘₐₓ erhöht.

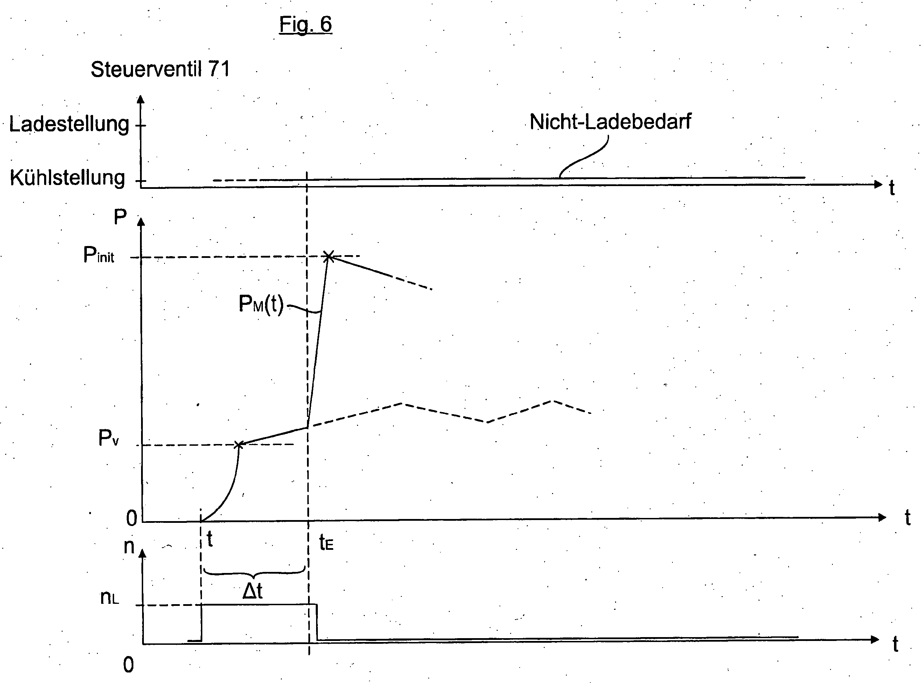

Der Teilladebetrieb T kann bei vorgegebenen Ereignissen deaktiviert werden, etwa bei einer tatsächlichen Fahrzeuginbetriebnahme oder bei einem Nichtvorliegen eines Druckspeicher-Ladebedarfs, wie es in der Fig. 6 veranschaulicht ist. Gemäß der Fig. 6 startet zunächst der Teilladebetrieb T zum Zeitpunkt t₁. Mit einem geringen Zeitversatz Δt nach dem Zeitpunkt t₁ erkennt die Auswerteeinheit 73 zum Zeitpunkt t_{E}, dass kein Druckspeicher-Ladebedarf vorliegt, das heißt der Druckspeicher 25 ist noch ausreichend mit Hydrauliköl gefüllt. Zum Zeitpunkt t_{E} wird daher der Modelldruck p_{M} auf einen Initialwert pᵢₙᵢₜ hochgesetzt.. Dadurch fällt die Ladedrehzahl der Ladepumpe 53 auf Null ab.

## Patentansprüche

1. Verfahren zum Betreiben eines Hydrauliksystems eines Automatikgetriebes, insbesondere Doppelkupplungsgetriebe, eines Fahrzeugs, mit einem Hochdruckkreislauf (H), in dem ein Druckspeicher (25), zumindest eine Kupplung (K1, K2), Aktuatoren (22) sowie eine Ladepumpe (53) geschaltet sind, und mit einer Steuereinrichtung (39), die bei Vorliegen eines Druckspeicher-Ladebedarfs die Ladepumpe (53) ansteuert, **dadurch gekennzeichnet, dass** die Steuereinrichtung (39) ein Bereitstellungsmodul (40) aufweist, in dem eine vom Fahrer beabsichtigte Fahrzeuginbetriebnahme ausgewertet wird, und dass sowohl bei Vorliegen einer solchen beabsichtigten Fahrzeuginbetriebnahme als auch bei Vorliegen eines Druckspeicher-Ladebedarfs das Bereitstellungsmodul (40) einen Teilladebetrieb (T) aktiviert, bei dem die Ladepumpe (53) mit einer Ladedrehzahl angesteuert wird, und zwar zur Erhöhung des Ist-Speicherdruckes (pᵢₛₜ) auf einen vorgegebenen Ausschalt-Druckwert (pₐᵤₛ), bei dem das Automatikgetriebe für eine bestimmte Zeit betriebsbereit ist.

2. Verfahren nach Anspruch 1, **dadurch gekennzeichnet, dass** das Bereitstellungsmodul (40) und die Ladepumpe (53) in einem Regelkreis eingebunden sind, in dem das Bereitstellungsmodul (40) auf der Grundlage des Ausschalt-Druckwerts (pₐᵤₛ) und eines ermittelten Ist-Speicherdrucks (pᵢₛₜ) die Ladepumpe (53) ansteuert.

3. Verfahren nach Anspruch 1 oder 2, **dadurch gekennzeichnet, dass** das Bereitstellungsmodul (40) zur Ermittlung des Ist-Speicherdrucks (pᵢₛₜ) eine Druckmodell-Einheit (79) aufweist, in der ein Druckmodell hinterlegt ist, in dem das Zeitverhalten des Ist-Speicherdrucks (pᵢₛₜ) durch einen Modell-Speicherdruck (p_{M}(t)) dem Teilladebetrieb (T) nachgebildet ist, und dass ihsbesondere das Zeitverhalten unter Ansteuerung der Ladepumpe (53) mit der Lade-Drehzahl (n_{L}) und unter Berücksichtigung eines Speicherdruck-Abbaus aufgrund eines Basisleckage-Druckverlusts nachgebildet ist.

4. Verfahren nach Anspruch 3, **dadurch gekennzeichnet, dass** zum Start (t₁) des Teilladebetriebs (T) der Modell-Speicherdruck (p_{M}) auf einen Nullwert setzbar ist, bei dem der Modell-Speicherdruck (d_{M}) dem Umgebungsdruck (p_{U}) entspricht.

5. Verfahren nach Anspruch 3 oder 4, **dadurch gekennzeichnet, dass** bei Vorliegen einer beabsichtigten Fahrzeuginbetriebnahme und bei Nichtvorliegen eines Druckspeicher-Ladebedarfs das Bereitstellungsmodul (40) deaktiviert ist und/oder der Modelldruck (p_{M}(t)) auf einen Initialwert (pᵢₙᵢₜ) gesetzt wird, der größer als der Ausschalt-Druckwert (pₐᵤₛ) ist.

6. Verfahren nach einem der vorhergehenden Ansprüche, **dadurch gekennzeichnet, dass** der Druckspeicher (25) eine Kolben-Zylinder-Einheit ist, bei der eine mit den Hydraulikleitungen (27, 31) verbundene Ölkammer (26) mittels eines vorgespannten Druckkolbens (27) beaufschlagt ist, und dass bei vollständig entleerter Ölkammer (26) der vorgespannte Druckkolben (27) gegen einen Anschlag (29) des Druckspeichers (25) mit einer Vorspannkraft (Fᵥ) gedrückt ist, und dass bei einem Befüllvorgang zur Überwindung der Vorspannkraft (Fᵥ) ein Hydraulikdruck anliegt, der größer als ein, mit der Vorspannkraft (Fᵥ) korrelierender Vorspanndruck (pᵥ) ist.

7. Verfahren nach Anspruch 6, **dadurch gekennzeichnet, dass** der Ausschalt-Druckwert (pₐᵤₛ) um eine erste Druckdifferenz (Δp₁) größer ist als der Vorspanndruck (pᵥ).

8. Verfahren nach Anspruch 7, **dadurch gekennzeichnet, dass** bei Überschreiten des Ausschalt-Druckwerts (pₐᵤₛ) das Bereitstellungsmodul (40) die Ladepumpe (53) ausschaltet, und dass bei Unterschreiten eines Einschalt-Druckwerts (pₑᵢₙ) das Bereitstellungsmodul (40) die Ladepumpe (53) einschaltet, und dass der Einschalt-Druckwert (pₑᵢₙ) um eine zweite Druckdifferenz (Δp₂) unter dem Ausschalt-Druckwert (pₐᵤₛ) liegt, die kleiner als die erste Druckdifferenz (Δp₁) ist.

9. Verfahren nach Anspruch 8, **dadurch gekennzeichnet, dass** das Bereitstellungsmodul (40) die Ladepumpe (53) nach einer Anzahl von Ein- und Ausschaltvorgängen unabhängig vom aktuell berechneten Modell-Speicherdruck (p_{M}) ansteuert.

10. Verfahren nach einem der vorhergehenden Ansprüche, **dadurch gekennzeichnet, dass** die Steuereinrichtung (39) bei Vorliegen sowohl einer Fahrzeuginbetriebnahme als auch eines Druckspeicher-Ladebedarfs einen Vollladebetrieb (V) ausführt, bei dem die Ladepumpe (53) mit einer Ladedrehzahl angesteuert wird zur Erhöhung des Ist-Speicherdruckes (pᵢₛₜ) auf einen maximalen Wert (pₘₐₓ), der größer ist als der Ausschalt-Druckwert (pₐᵤₛ), und dass insbesondere der Initialwert (pᵢₙᵢₜ), auf den der Modell-Speicherdruck (p_{M}) bei Nichtvorliegen eines Druckspeicher-Ladebedarfs gesetzt wird, größer als der Ausschalt-Druckwert (pₐᵤₛ) ist.

11. Verfahren nach einem der vorhergehenden Ansprüche, **dadurch gekennzeichnet, dass** das Bereitstellungsmodul (40) den Teillädebetrieb (T) bei vorgegebenen Ereignissen deaktiviert, etwa einer Fahrzeuginbetriebnahme.

12. Verfahren nach einem der vorhergehenden Ansprüche, **dadurch gekennzeichnet, dass** die Modelldruckschwellen der Druckmodelleinheit (79), insbesondere der Vorspanndruck (pᵥ), für unterschiedliche Temperaturen hinterlegt sind.

## Claims

1. Method for operating a hydraulic system of an automatic gearbox, in particular a dual clutch gearbox, of a motor vehicle, comprising a high pressure circuit (H) in which a pressure accumulator (25), at least one coupling (K1, K2), actuators (22) and a charging pump (53) are connected and comprising a control device (39) which controls the charging pump (53) when it is necessary to charge the pressure accumulator, **characterised in that** the control device (39) comprises a supply module (40) in which an initial operation of the motor vehicle planned by the driver is evaluated and **in that** both in the presence of such a planned initial operation of the vehicle and also if it is necessary to charge the pressure accumulator the supply module (40) activates a part charging operation (T), in which the charging pump (53) is controlled at a charging speed in order to increase the actual accumulator pressure (pᵢₛₜ) to a predefined switch-off pressure value (pₐᵤₛ) in which the automatic gearbox is ready for operation for a specific period.

2. Method according to claim 1, **characterised in that** the supply module (40) and the charging pump (53) are connected into a control circuit, in which the supply module (40), on the basis of the switch-off pressure value (pₐᵤₛ) and a determined actual accumulator pressure (pᵢₛₜ), controls the charging pump (53).

3. Method according to either claim 1 or claim 2, **characterised in that** the supply module (40) for determining the actual accumulator pressures (pᵢₛₜ) comprises a pressure model unit (79) in which a pressure model is saved, in which the time response of the actual accumulator pressure (pᵢₛₜ) is reproduced by a model accumulator pressure (p_{M}(t)) for the part charging operation (T) and **in that** in particular the time response is reproduced by controlling the charging pump (53) at the charging speed (n_{L}) and in consideration of an accumulator pressure reduction caused by a base leakage pressure loss.

4. Method according to claim 3, **characterised in that** at the start (t₁) of the partial charging operation (T) the model accumulator pressure (p_{M}) can be set to zero, at which the model accumulator pressure (p_{M}) corresponds to the environmental pressure (p_{U}).

5. Method according to either claim 3 or claim 4, **characterised in that** in the presence of an intended initial operation of the motor vehicle and in the absence of a need to charge the pressure accumulator the supply module (40) is deactivated and/or the model pressure (p_{M}(t)) is set to an initial value (pᵢₙᵢₜ), which is greater than the switch-off pressure value (pₐᵤₛ).

6. Method according to any one of the preceding claims, **characterised in that** the pressure accumulator (25) is a piston-cylinder unit, in which an oil chamber (26) connected to the hydraulic lines (27, 31) is charged by means of a pretensioned pressure piston (27), and **in that** with a fully emptied oil chamber (26) the pretensioned pressure piston (27) is pushed against a stop (29) of the pressure accumulator (25) with a pretensioning force (Fᵥ) and **in that** during a filling process to overcome the pretensioning force (Fᵥ) the hydraulic pressure is greater than a preload pressure (pᵥ) correlating with the pretensioning force (Fᵥ).

7. Method according to claim 6, **characterised in that** the switch-off-pressure value (pₐᵤₛ) is greater than the preload pressure (pᵥ) by a first pressure difference (Δp₁).

8. Method according to claim 7, **characterised in that** if the switch-off-pressure value (pₐᵤₛ) is exceeded the supply module (40) switches off the charging pump (53), and **in that** if a switch-on-pressure value (pₑᵢₙ) is fallen below the supply module (40) switches on the charging pump (53), and **in that** the switch-on pressure value (pₑᵢₙ) is below the switch-off-pressure value (pₐᵤₛ) by a second pressure difference (Δp₂) which is smaller than the first pressure difference (Δp₁).

9. Method according to claim 8, **characterised in that** the supply module (40) controls the charging pump (53) after a number of switch on and switch-off processes independently of the currently calculated model accumulator pressure (p_{M}).

10. Method according to any one of the preceding claims, **characterised in that** the control device (39) if there is an initial operation of a motor vehicle or a need to charge the pressure accumulator performs a full charging process (V), in which the charging pump (53) is controlled at a charging speed to increase the actual accumulator pressure (pᵢₛₜ) to a maximum value (pₘₐₓ), which is greater than the switch-off pressure value (pₐᵤₛ), and in particular the initial value (pᵢₙᵢₜ), to which the model accumulator pressure (pM) is set in the absence of a need to charge the pressure accumulator, is greater than the switch-off pressure value (pₐᵤₛ).

11. Method according to any one of the preceding claims, **characterised in that** the supply module (40) deactivates the part charging operation (T) during prespecified events, such as the initial operation of a motor vehicle.

12. Method according to any one of the preceding claims, **characterised in that** the model pressure thresholds of the pressure model unit (79), in particular the preload pressure (pᵥ), are saved for different temperatures.

## Revendications

1. Procédé de fonctionnement d'un système hydraulique d'une transmission automatique, en particulier une transmission à double embrayage, d'un véhicule, comprenant un circuit haute pression (H), dans lequel un accumulateur de pression (25), au moins un embrayage (K1, K2), des actionneurs (22) ainsi qu'une pompe de suralimentation (53) sont branchés, et un dispositif de commande (39), qui commande la pompe de suralimentation (53) en présence d'un besoin de chargement de l'accumulateur de pression, **caractérisé en ce que** le dispositif de commande (39) présente un module de mise en attente (40) dans lequel une mise en marche du véhicule envisagée par le conducteur est évaluée et, autant en présence d'une telle mise en marche du véhicule envisagée par le conducteur qu'en présence d'un besoin de chargement de l'accumulateur de pression, le module de mise en attente (40) active une commande de chargement partiel (T) dans laquelle la pompe de suralimentation (53) est commandée à une vitesse de chargement pour augmenter la pression théorique de l'accumulateur (pᵢₛₜ) à une valeur de pression de débrayage prédéfinie (pₐᵤₛ), dans laquelle la transmission automatique est mise en attente pendant une période prédéterminée.

2. Procédé selon la revendication 1, **caractérisé en ce que** le module de mise en attente (40) et la pompe de suralimentation (53) sont intégrés à un circuit de réglage dans lequel le module de mise en attente (40) commande la pompe de suralimentation (53) sur la base de la valeur de pression de débrayage (pₐᵤₛ) et d'une pression théorique (pᵢₛₜ) de l'accumulateur déterminée.

3. Procédé selon la revendication 1 ou 2, **caractérisé en ce que** le module de mise en attente (40) présente pour déterminer la pression théorique (pᵢₛₜ) de l'accumulateur une unité de modèle de pression (79), dans laquelle est mémorisé un modèle de pression dans lequel le comportement dans le temps de la pression théorique (pᵢₛₜ) de l'accumulateur est reproduit par une pression d'accumulateur modèle (p_{M}(t)) selon la commande de chargement partiel (T) et, en particulier, le comportement dans le temps est reproduit par commande de la pompe de suralimentation (53) à la vitesse de chargement (n_{L}) et en tenant compte d'une chute de la pression de l'accumulateur due à une perte de pression occasionnée par des fuites de base.

4. Procédé selon la revendication 3, **caractérisé en ce que**, au départ (t₁) de la commande de chargement partiel (T), la pression d'accumulateur modèle (p_{M}) peut être réglée à une valeur nulle dans laquelle la pression d'accumulateur modèle (p_{M}) correspond à la pression ambiante (p_{U}).

5. Procédé selon la revendication 3 ou 4, **caractérisé en ce que**, en présence d'une mise en marche envisagée et en l'absence d'un besoin de chargement de l'accumulateur de pression, le module de mise en attente (40) est désactivé et/ou la pression modèle (p_{M}(t)) est réglée sur une valeur initiale (pᵢₙᵢₜ) qui est plus grande que la valeur de pression de débrayage (pₐᵤₛ).

6. Procédé selon l'une quelconque des revendications précédentes, **caractérisé en ce que** l'accumulateur de pression (25) est une unité à piston et cylindre dans laquelle la chambre à huile (26) reliée aux conduites hydrauliques (27, 31) est alimentée au moyen d'un piston de compression précontraint (27) et, lorsque la chambre à huile (26) est complètement vidée, le piston de compression précontraint (27) est pressé contre une butée (29) de l'accumulateur de pression (25) avec une force de précontrainte (Fᵥ) et, lors d'une opération de remplissage pour pallier la force de précontrainte (Fᵥ), on applique une pression hydraulique qui est plus grande qu'une pression de précontrainte (pᵥ) en corrélation avec la force de précontrainte (Fᵥ).

7. Procédé selon la revendication 6, **caractérisé en ce que** la valeur de pression de débrayage (pₐᵤₛ) est plus grande que la pression de précontrainte (pᵥ) d'une première différence de pression (Δp₁).

8. Procédé selon la revendication 7, **caractérisé en ce que**, lors de dépassement de la valeur de pression de débrayage (pₐᵤₛ), le module de mise en attente (40) déconnecte la pompe de suralimentation (53) et, en dessous d'une valeur de pression d'embrayage (pₑᵢₙ), le module de mise en attente (40) connecte la pompe de suralimentation (53) et la valeur de pression d'embrayage (pₑᵢₙ) se situe en dessous d'une valeur de pression de débrayage (pₐᵤₛ) d'une seconde différence de pression (Δp₂) qui est plus petite que la première différence de pression (Δp₁).

9. Procédé selon la revendication 8, **caractérisé en ce que** le module de mise en attente (40) commande la pompe de suralimentation (53) après un certain nombre d'étapes d'embrayage et de débrayage indépendamment de la pression de l'accumulateur modèle (p_{M}) couramment calculée.

10. Procédé selon l'une quelconque des revendications précédentes, **caractérisé en ce que** le dispositif de commande (39) effectue, en présence autant d'une mise en marche du véhicule que d'un besoin de chargement de l'accumulateur de pression, une commande à pleine charge (V), dans laquelle la pompe de suralimentation (53) est commandée à une vitesse de chargement pour augmenter la pression théorique (pᵢₛₜ) de l'accumulateur à une valeur maximale (pₘₐₓ), qui est plus grande que la valeur de pression de débrayage (pₐᵤₛ) et, en particulier, la valeur initiale (pᵢₙᵢₜ), sur laquelle la pression d'accumulateur modèle (p_{M}) est réglée en l'absence d'un besoin de chargement de l'accumulateur de pression, est plus grande que la valeur de pression de débrayage (pₐᵤₛ).

11. Procédé selon l'une quelconque des revendications précédentes, **caractérisé en ce que** le module de mise en attente (40) désactive la commande de chargement partiel (T) lors d'incidents prédéfinis, notamment lors d'une mise en marche du véhicule.

12. Procédé selon l'une quelconque des revendications précédentes, **caractérisé en ce que** les seuils de pression modèle de l'unité de pression modèle (79) en particulier la pression de précontrainte (pᵥ), sont mémorisés pour différentes températures.
